# EUROPEAN PATENT APPLICATION

(11) **EP 4 462 555 A1**
(43) Date of publication of application: **13.11.2024**
(21) Application number: 24175110.6
(22) Date of filing: 10.05.2024
(51) Int. Cl.: H01M 50/107, H01M 50/152, H01M 50/392, H01M 50/30, H01M 50/414, H01M 50/463, H01M 50/471, H01M 50/491

(54) **RECHARGEABLE BATTERY**

(30) Priority: 09.05.2023 KR 20230060165
(71) Applicant: Samsung SDI Co., Ltd., Yongin-si, Gyeonggi-do 17084 (KR)
(72) Inventor: SEINO, Hiroshi, 17084 Gyeonggi-do (KR); AHN, Jeongchull, 17084 Gyeonggi-do (KR); KIM, Sanghyun, 17084 Gyeonggi-do (KR); CHA, Jaehyuck, 17084 Gyeonggi-do (KR)
(74) Representative: Michalski Hüttermann & Partner Patentanwälte mbB

(57) **Abstract**

A rechargeable battery includes: an electrode assembly; a case accommodating the electrode assembly and an electrolyte; a cap plate coupled to the case and sealing the inside of the case; and an insulator positioned between the electrode assembly and the cap plate, and the insulator is formed by a foaming body including a plurality of holes.

## Description

### BACKGROUND

### 1. Field

One or more embodiments of the present disclosure relate to a rechargeable battery.

### 2. Description of the Related Art

The demand for rechargeable batteries is increasing as an energy source with the development of technology for mobile devices.

A jelly roll type or kind electrode assembly may be formed by winding a stripe type or kind electrode and may include an insulator for preventing a short-circuit between a cap plate and the electrode assembly or damage to the electrode assembly.

In general, the insulator may be manufactured by cutting a plastic sheet into a circular or rectangular shape according to a form of a case of a rechargeable battery. A plurality of through-holes may be formed in the insulator so that an electrolyte may be easily injected, and if (e.g., when) there is no through-hole, a penetration passage of the electrolyte may be blocked, and the electrolyte injection duration becomes longer and the productivity is lowered.

On the other hand, conductive foreign substance particles such as metal particles in the electrode assembly may be floated in the electrolyte when the electrolyte is injected, causing a small short-circuit. When such small short-circuit occurs in a battery, a process for repairing the small short-circuit is relatively difficult or is not easy.

### SUMMARY

One or more aspects of embodiments of the present disclosure are directed toward a rechargeable battery that has improved safety by effectively reducing a small short-circuit due to conductive foreign substance particles, while facilitating electrolyte injection of an electrode assembly.

Additional aspects will be set forth in part in the description which follows and, in part, will be apparent from the description, or may be learned by practice of the presented embodiments of the disclosure.

According to one or more embodiments of the present disclosure, a rechargeable battery includes: an electrode assembly; a case accommodating the electrode assembly and an electrolyte; a cap plate coupled to the case and sealing the inside of the case; and an insulator between (e.g., positioned between) the electrode assembly and the cap plate, the insulator including (e.g., being formed by) a foaming body including a plurality of holes.

The foaming body may be expanded while (e.g., when) absorbing the electrolyte.

An expansion rate of the foaming body after being immersed in the electrolyte and then left at 60 °C for 24 hours may be 150% or more.

The foaming body may have a polarity group (e.g., a polar functional group). In one or more embodiments, the polarity group (e.g., the polar functional group) may include (e.g., may be) a carbonyl group (C = O).

The foaming body may include at least one of polyurethane, polyester, polyamide, epoxy resin, melamine resin, acrylic ester, or polyacrylic acid.

In one or more embodiments, the insulator may further include an insulating film having a larger rigidity than that of the foaming body.

The insulating film may be attached to at least one side (or surface) of both (e.g., two opposite) sides (or surfaces) of the foaming body.

The foaming body may be attached to each of both (e.g., two opposite) sides (or surfaces) of the insulating film.

A stinging strength of the foaming body may be 1.5 kgf or more.

A ventilation of the foaming body may be 10 sec/100 mL air or less, and a size of a hole included in the foaming body may be 1 µm to 200 µm.

The electrode assembly may be a winding type or kind.

According to one or more embodiments of the present disclosure, when a diagonal incision portion is formed in an uncoated portion of an electrode, the uncoated portion of the electrode may be easily folded and overlapped, thereby facilitating a compaction process.

### BRIEF DESCRIPTION OF THE DRAWINGS

The accompanying drawing is included to provide a further understanding of the present disclosure, and is incorporated in and constitutes a part of this disclosure. The drawing illustrates example embodiments of the present disclosure and, together with the description, serve to explain principles of present disclosure.
FIG. 1 is a cross-sectional view of a rechargeable battery according to one or more embodiments of the present disclosure.
FIG. 2 is an image acquired by photographing a surface of a foaming body according to one or more embodiments of the present disclosure.
FIG. 3 is a diagram for describing an operation of a foaming body according to one or more embodiments of the present disclosure.
FIG. 4 and FIG. 5 are each a schematic cross-sectional view of an insulator according to one or more embodiments of the present disclosure.

### DETAILED DESCRIPTION

The present disclosure may be modified in many alternate forms, and thus specific embodiments will be exemplified in the drawing and described in more detail. It should be understood, however, that it is not intended to limit the present disclosure to the particular forms disclosed, but rather, is intended to cover all modifications, equivalents, and alternatives falling within the spirit and scope of the present disclosure.

In the following detailed description, only certain embodiments of the present disclosure have been shown and described, simply by way of illustration. The present disclosure may be variously implemented and is not limited to the following embodiments.

In addition, each configuration illustrated in the drawings is arbitrarily shown for understanding and ease of description; thus, embodiments of the present disclosure are not limited thereto.

In the drawings, the thickness of layers, films, panels, regions, etc., may be exaggerated for clarity. In addition, in the drawings, for convenience of description, thicknesses of a part and an area may be exaggeratedly illustrated. It will be understood that when an element such as a layer, film, region, or substrate is referred to as being "on" another element, it may be directly on the other element or intervening elements may also be present therebetween. In contrast, when an element is referred to as being "directly on" another element, there are no intervening elements present.

In the present disclosure, unless explicitly described to the contrary, the word "include(s)/including", and variations such as "comprise(s)/comprising" or "have(has)/having", will be understood to imply the inclusion of stated elements but not the exclusion of any other elements.

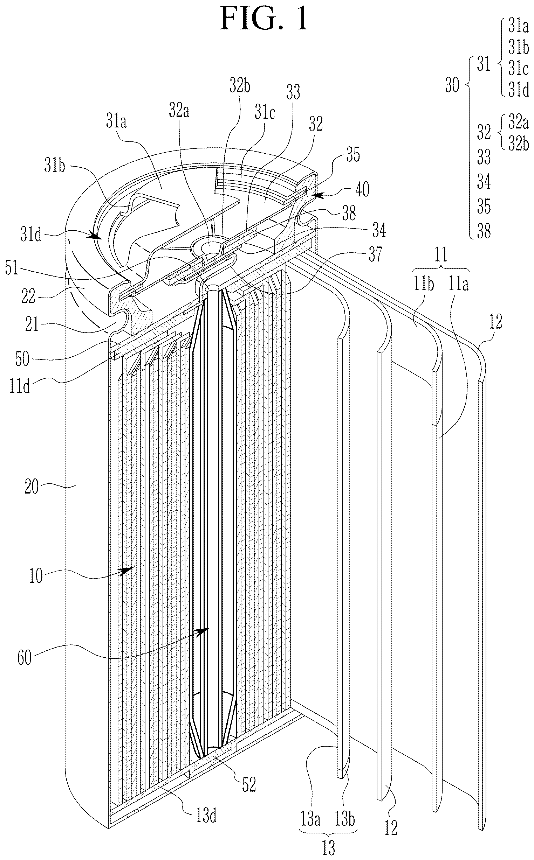

FIG. 1 is a cross-sectional view of a rechargeable battery according to one or more embodiments of the present disclosure.

As illustrated in FIG. 1, a rechargeable battery according to one or more embodiments of the present disclosure may include an electrode assembly 10, a case 20 housing the electrode assembly 10, a cap assembly 30 coupled to an opening of the case 20 via a gasket and electrically connected to the electrode assembly 10, an insulator 50 between (e.g., provided between) the cap assembly 30 and the electrode assembly 10, and a center pin 60 at (e.g., disposed at) the center of the electrode assembly 10.

The electrode assembly 10 may include a first electrode 11, a separator 12, and a second electrode 13 stacked sequentially. The electrode assembly 10 may be a cylindrical jelly roll in which the first electrode 11, the separator 12, and the second electrode 13 are stacked, and then wound around the center pin 60.

The first electrode 11 may include a coated portion 11a in which a first active material layer (e.g., including transition metal oxides (LiCoO₂, LiNiO₂, LiMn₂O₄, etc.)) is formed, and a first uncoated portion 11b which is a region in which the first active material layer is not formed and a first substrate is thus exposed, and is formed along the first active material layer, on both (e.g., opposite) sides of a conductive substrate (or a current collector) formed of a thin metal plate.

The second electrode 13 may include a coated portion 13a in which a second active material layer (e.g., including graphite, carbon, etc.) is formed, and a second uncoated portion 13b which is a region in which the second active material layer is not formed and a second substrate is thus exposed, and is formed along the second active material layer, on both (e.g., opposite) sides of the second substrate formed by a thin metal plate. In one or more embodiments, the first electrode 11 may be an anode and the second electrode 13 may be a cathode.

In one or more embodiments, the first substrate of the first electrode 11 may be aluminum (Al), and the second substrate of the second electrode 13 may be copper (Cu), nickel (Ni), or an alloy of copper and nickel.

The separator 12 is disposed between the first electrode 11 and the second electrode 13, and insulates the first electrode 11 and the second electrode 13 from each other, and the separate 12 may adopt (e.g., include or be formed of) polyethylene, polypropylene, poly vinylidene fluoride, or multi-layers of two or more layers thereof, or may adopt mixed multi-layers such as a 2-layer separator of polyethylene/polypropylene, a 3-layer separator of polyethylene/polypropylene/polyethylene, a 3-layer separator of polypropylene/polyethylene/polypropylene, etc., of course, embodiments of the present disclosure are not limited thereto.

In a jelly roll state, a first electrode current collector 11d may be connected to the first uncoated portion 11b of the electrode assembly 10, and a second electrode current collector 13d may be connected to the second uncoated portion 13b of the electrode assembly 10.

The second electrode current collector 13d may be in contact with and electrically connected to the case 20, while the first electrode current collector 11d may be formed to have a smaller width than that of the second current collector 13d, and the first electrode current collector 11d is thus formed not to be in contact with the case 20.

The uncoated portion 11b of the first electrode 11 may be bent and overlapped toward the center pin 60 which is the center of the electrode assembly 10, and then fixed by welding. The first uncoated portion 11b may be electrically connected to the first electrode current collector 11d in an overlapped state.

The first uncoated portion 11b may include one surface which is in contact with and electrically connected to the first electrode current collector 11d, and the other surface facing an end of the second electrode 13, and the other surface is spaced apart from the end of the second electrode 13.

In some embodiments, an insulating layer may be positioned on one surface or the other surface of the first uncoated portion 11b.

A lead tab 37 may be electrically connected to the first electrode current collector 11d.

One end of the lead tab 37 may be connected to the first electrode current collector 11d by welding, and the other end may be electrically connected to the cap assembly 30. In one or more embodiments, the lead tab 37 may be bent with one surface to face the electrode assembly 10 in order to increase a contact area with the cap assembly 30.

The insulator 50 having an opening for exposing the center pin 60 may be positioned on the first electrode current collector 11d.

The insulator 50 may be formed to be larger than the first electrode current collector 11d, and to be in contact with an inner surface of the case 20. In this way, when the insulator 50 is formed to be larger than the first electrode current collector 11d, a set or predetermined gap is formed between the first electrode current collector 11d and the case 20 with a width of the insulator 50 that protrudes out of the first electrode current collector 11d. The gap between the first electrode current collector 11d and the case 20 may prevent or reduce a phenomenon in which the first electrode current collector 11d and the case 20 are in contact with each other and are shortcircuited each other.

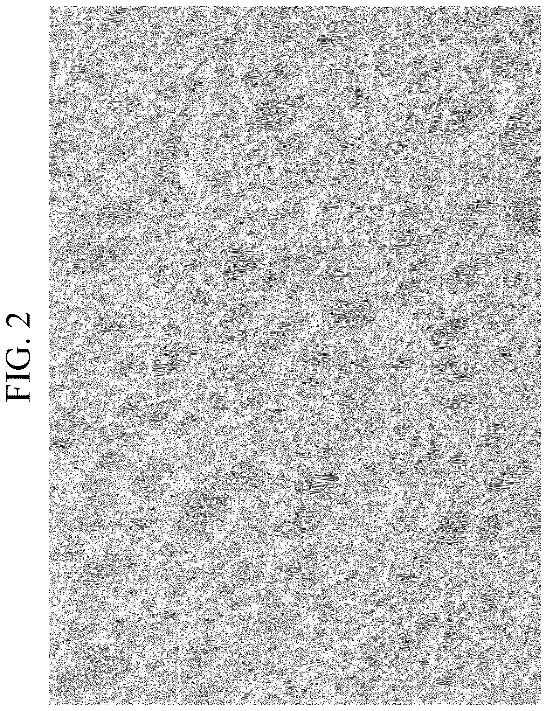

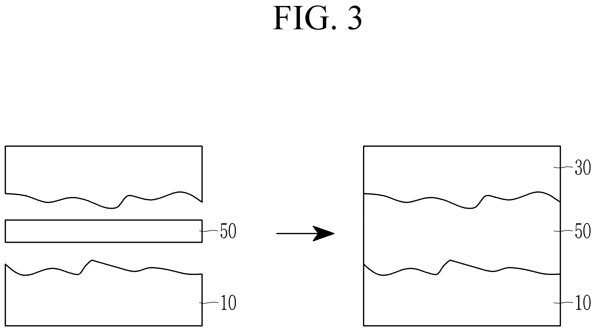

FIG. 2 is an image acquired by photographing a surface of a foaming body according to one or more embodiments of the present disclosure and FIG. 3 is a diagram for describing an operation of a foaming body according to one or more embodiments of the present disclosure.

The insulator 50 may include (e.g., may be) the foaming body shown in FIG. 2 and may include a plurality of voids (e.g., holes). The voids may be randomly in one or more suitable sizes in the foaming body, and may also form one or more independent separated spaces, and may have a form in which neighboring voids are continuously connected.

The electrolyte may be penetrated into the insulator 50. Further, small particles floated in the electrolyte may be trapped in the void, and as a result, the floated small particulates are reduced to prevent or reduce the short-circuit. Because the foaming body is made of a soft material, burr may not be generated upon cutting, and even though the burr is generated, the burr does not have a hardness enough to damage the electrode assembly.

When a ventilation of the insulator 50 according to some embodiments of the present disclosure is large, penetration of the electrolyte is delayed, so the ventilation may be 10 sec/100mL air or less, and 5sec/100mL air or less.

In one or more embodiments, the ventilation may be measured by the Gurley testing method, and in these embodiments, an inner ventilation weight (pressure) is 567 g, an air permeability is 100 mL, and a hole diameter of a permeation surface is 28.6 mm (6.45 cm²).

The void of the insulator 50 may be 1 µm to 200 µm in an average diameter D50, or may be 10 µm to 100 µm. When the void is more than 200 µm, a void rate becomes larger, so an insulator thickness required for insulation increases, and as a result, compression is possible, but a workability due to a compression rate is lowered.

A foaming body material forming the insulator 50 as a resin including a functional group having a high polarity, such as a carbonyl group, may include a polymer having the carbonyl group in at least some of the repeated units. For example, in one or more embodiments, the foaming body material may be polyurethane, polyester, polyamide, epoxy resin, melamine resin, acrylic ester, or polyacrylic acid.

The foaming body may be manufactured by a suitable technique such as a method of generating air bubbles by injecting gas into the foaming body material, or generating the air bubbles by a chemical reaction, or generating the air bubbles by decomposing the foaming body material, or forming the void by stretching the foaming body material, or eluting a soluble component, etc.

In a state in which the foaming body is dried and has a reduced volume, the foaming body may be inserted into the case, and when the electrolyte is injected, the foaming body is swelled or expanded while absorbing the electrolyte. As the foaming body is swelled, a size of the void included in the foaming body may also be expanded jointly.

The foaming body material is a material containing a polarity group (e.g., a polar functional group) having a high affinity with the polarity of the electrolyte (e.g., a polar electrolyte), and the electrolyte is absorbed into the foaming body through the void, and swelled, and while the void is filled with the electrolyte, the void is expanded, so an expansion rate of the foaming body is larger than that of a foaming body made of a non-polar material.

In this way, as the foaming body is expanded and swelled due to the electrolyte, the gap between the cap assembly and the electrode assembly may be filled with the foaming body. In contrast, the plastic insulator in the art has a fixed form to fill a vertical gap. However, while the insulator utilizing the foaming body according to one or more embodiments of the present disclosure has a flexible feature and is easily transformed according to pressure, the insulator may fill one or more suitable types (kinds) of gaps between the cap assembly and the electrode assembly. For convenience of description, in FIG. 3, a lower surface of the cap assembly 30 and an upper surface of the electrode assembly 10 are each expressed as an uneven form other than a flat surface.

Further, while the foaming body is expanded, the foaming body fills the gap between the cap assembly 30 and the electrode assembly 10, and as a result, the foaming body presses the electrode assembly 10 to fix the electrode assembly 10, thereby reducing movement in the case 20.

In one or more embodiments, as the pressure applied to the electrode assembly 10 increases due to a volume increase of the foaming body, a pressing force due to the volume increase of the foaming body is appropriately adjusted to prevent or reduce the electrode assembly from being damaged.

As such, when the foaming body is installed as the insulator according to one or more embodiments of the present disclosure, even though a shock is applied to the case, the insulator 50 formed by the foaming body may absorb the shock to prevent or reduce the electrode assembly from being damaged.

### Experimental Example 1 Evaluation of swelling

Comparative Example 1 and Example 1 are each a forming body that forms an insulator according to one or more embodiments of the present disclosure, holes having a diameter of 20 mm were formed in each of the foaming bodies made of the same material, and then the foaming bodies were put into different solvents, and then sealed, and left at 60 °C for one day, and the diameters/radii of the holes were measured. As the electrolyte, a mixed solvent (a volume ratio of 20:10:70) of ethylene carbonate and ethyl methyl carbonate and dimethyl carbonate dissolved with 1 M LiPF₆ was utilized.

In this evaluation, the expansion rate is calculated as Equation 1 and shown in Table 1 . Expansion rate = (radius (mm) after solvent is input/radius (mm) before solvent is input)

**Table 1**

| | Material | Solvent | Expansion rate |
|---|---|---|---|
| Comparative Example 1 | Polyurethane | Water | 120% |
| Example 1 | polyurethane | electrolyte | 250% |

Polyurethane as a resin having a polar functional group has absorption and expansion properties. Referring to Table 1, it can be seen that an expansion rate when polyurethane is immerged in water of Comparative Example is 120% and an expansion rate when polyurethane is immerged in electrolyte of Example 1 is 250%, so the expansion rate of Example 1 is the larger. In this case, it can be seen that because polyurethane has a functional group having a higher affinity with the electrolyte, polyurethane is expanded more effectively in the electrolyte than in water not containing the functional group.

### Experimental Example 2 Evaluation of property

Examples 2 to 14 are each a foaming body that form an insulator according to one or more embodiments of the present disclosure, and were each manufactured with a thickness of 500 µm, and insulators in Comparative Examples 3 to 5 were also each manufactured with the same thickness.

Because it is relatively difficult or even impossible to properly measurer the ventilation at less than 1 second, the minimum ventilation was set to 1 second. As a stinging (e.g., puncturing or cutting) strength, the maximum force (kgf) was measured until a needle was penetrated by fixing the foaming body with a jig and stinging a semicircular needle having a diameter 1.0 mm and a tip-shape radius of 0.5 mm at a test speed of 50 ± 5 mm/min. A drop test was repeated until any one of heating, ignition, and open-circuit-voltage (OCV) degradation of 50 mA or more occurs by setting 10 drops as one cycle when dropping the battery to a concrete floor from a height of 1.8 m. In this test, the number of cycles of a test in which heating, ignition, and OCV degradation of 50 mA or more do not occur was set as a drop test tolerance. When the drop test tolerance is 9 cycles or more, the drop test was passed.

In a vibration test, simple vibration having an amplitude of 0.76 mm and a maximum forward width of 1.52 mm was applied to a battery. In this test, a range of a frequency of 10 Hz to 55 Hz was changed at a rate of 1 Hz per 1 minute. Testing a full range (10 to 55 Hz) of the frequency for 90 minutes by attaching the battery to a vibration test facility to vibrate in a vertical direction of the battery was calculated at one cycle. The test was repeated until any one of heating, ignition, leakage, rupture, and open circuit voltage (OCV) degradation of 50 mA or more occurs, and the number of tests in which heating, ignition, leakage, rupture, and OCV degradation of 50 mA or more do not occur was set as the vibration test tolerance. When the vibration test tolerance is 6 cycles or more, the vibration test was passed.

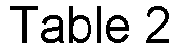

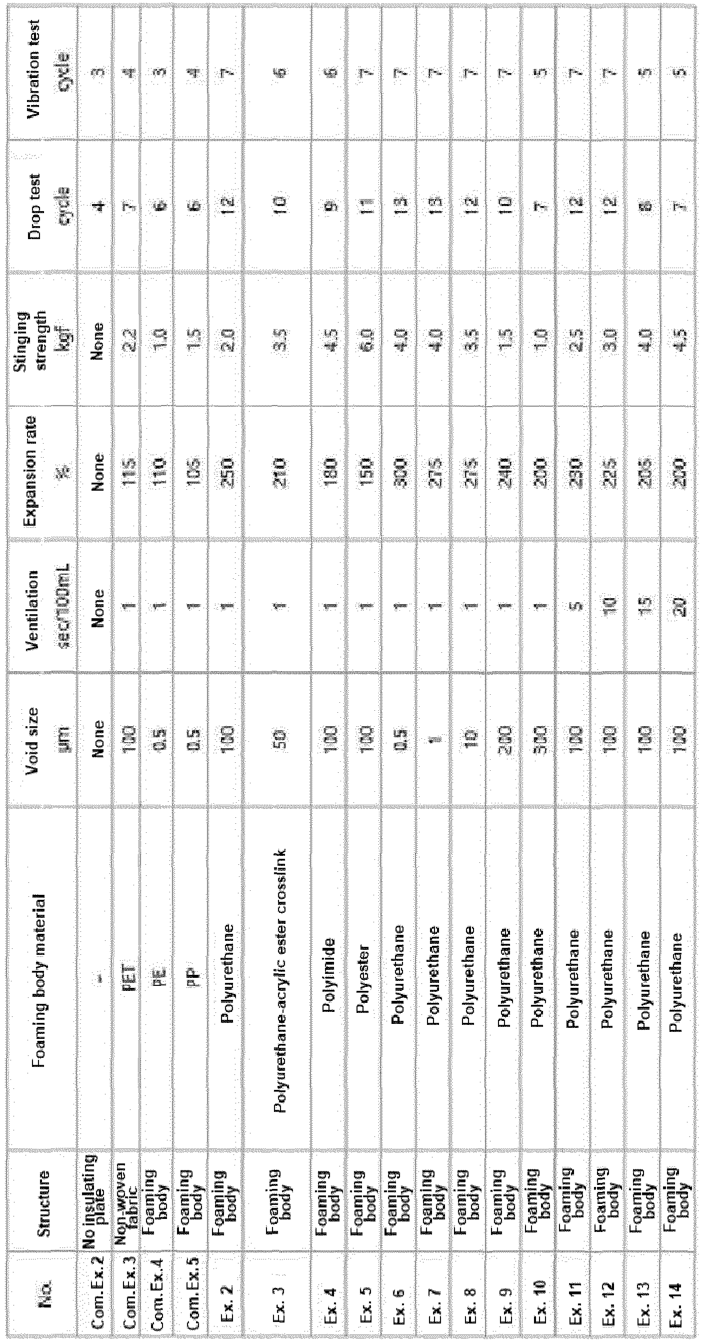

Referring to Table 2, "PET" represents polyethylene terephthalate, "PE" represents polyethylene, and "PP" represents polypropylene. As shown in Table 2, expansion rates of 150% or more in Examples 2 to 14, which are each a foaming body made of a resin having a carbonyl structure, were higher than those in Comparative Examples 4 and 5 having a small polarity.

Further, it can be seen that in Comparative Example 2 not containing the insulator, Comparative Example 3 having non-woven fabrics as an insulating plate, and Comparative Examples 4 and 5 having the small polarity, the vibration test tolerance, which is less than 6 cycles, so safety is lower than that in Examples 2 to 9, 11, and 12 that satisfy 6 cycles or more.

In this test, in the comparative examples, collision occurs as the electrode assembly moves inside the case because the gap between the electrode assembly and the cap assembly cannot be filled, and as a result, the safety may be lowered.

In respect to the stinging strength, a measurement may be shown to vary depending on a resin material and a density of the foaming body, and it can be seen that as in Examples 11 to 14, the larger the ventilation, the larger the stinging strength, and as in Examples 6 to 10, the smaller the size of the void, the larger the stinging strength.

It can be seen that the stinging strength in Comparative Examples 4 and 5 is more desired (e.g., more excellent or suitable) than Comparative Example 3 having the same void size and ventilation, and the stinging strength of Example 6 is more desired (e.g., more excellent or suitable) than those of Comparative Examples 4 and 5.

Because the resin density in the foaming body is relatively high and the resin is relatively hard in Examples 13 and 14 in which the ventilation is more than 10 seconds, a buffer action of absorbing the shock is weak, so the vibration test tolerance may be only 5 cycles, but their expression rates are 150% or more, and as a result, the stinging strength is still desired (e.g., excellent or suitable). Therefore, the foaming body may be manufactured according to a required feature of the insulator.

As such, when the insulator is formed by utilizing the foaming body according to one or more embodiments of the present disclosure, the insulator may be easily manufactured by adjusting the void size, the expansion rate, and the rigidity of the foaming body, so the electrode assembly may be safely protected from an external shock while easily filling gaps having one or more suitable sizes and forms.

Referring back to FIG. 1, the lead tab 37 may be connected in contact with a first auxiliary plate 34 of the electrode assembly 10 to be described later in more detail through an opening 51 of the insulator 50.

Because the electrode assembly 10 is wound around the center pin 60, the center pin 60 may be positioned at the center of the electrode assembly 10, and disposed in line with a direction in which the electrode assembly 10 is inserted into the case 20.

When the center pin 60 receives a full-surface compression load applied from the outside of the rechargeable battery or a local shock load, the center pin 60 is minimally transformed or is maintained in a shape close to a shape before being transform, and the center pin 60 may be a hollow circular pipe form. Further, in some embodiments, the center pin 60 may serve as a movement passage of gas generated from the inside. In some embodiments, the center pin 60 may not be provided (e.g., excluded) as designed or as necessary.

In order for the center pin 60 to be minimally transformed with respect to the external shock, the center pin 60 may be made of a material having a set or predetermined rigidity, e.g., a metal having conductivity, such as steel, steel alloy, aluminum, aluminum alloy, etc. As such, because the center pin 60 has the conductivity, the center pin 60 is installed so that both (e.g., opposite) ends of the center pin 60 maintain an electrical insulation state from the first electrode current collector 11d and the second electrode current collector 13d.

For example, in one or more embodiments, an insulation pad 52 is disposed between a lower end of the center pin 60 and the second electrode current collector 13d corresponding thereto. An upper end of the center pin 60 penetrates a through-hole formed at the center of the first electrode current collector 11d in an insulation state to be supported on the insulator 50. In these embodiments, the upper end of the center pin 60 may also be spaced apart from the through-hole of the first electrode current collector 11d, and an insulation member may also be interposed therebetween. Therefore, the movement of the center pin 60 is restricted in a longitudinal direction of the center pin 60, and the center pin 60 may maintain a stable state at the center of the electrode assembly 10.

One side of the case 20 may be opened and the case 20 may be formed to have the substantially same shape as the jelly roll type or kind electrode assembly 10 so that the electrode assembly 10 may be inserted jointly with the electrolyte.

For example, in one or more embodiments, the case 20 may include a circular bottom portion and a cylindrical side portion extended with a set or predetermined length in an upward direction from the bottom portion. An upper portion of the cylindrical case may be opened during an assembly process of the rechargeable battery. Therefore, the electrode assembly may be inserted into the cylindrical case during the assembly process of the rechargeable battery, and then the electrolyte may be injected into the cylindrical case.

The electrolyte enables lithium ions generated by an electrochemical reaction to move between the first electrode and the second electrode inside the battery. The electrolyte may include lithium salt such as LiPF₆ and/or LiBF₄ in an organic solvent such as ethylene carbonate (EC), propylene carbonate (PC), diethyl carbonate (DEC), ethylmethyl carbonate (EMC), dimethyl carbonate (EMC), and/or fluoroethylene carbonate (FEC), and may adopt carbonate-based and ester-based solvents. The electrolyte may be a liquid, but is not limited thereto, for example, may be a solid or gel state.

The case 20 may be connected to the second electrode current collector 13d of the electrode assembly and serve as a second electrode terminal of the rechargeable battery. Therefore, the case 20 may be made of conductive metal such as aluminum, aluminum alloy, or nickel-plated steel.

The cap assembly 30 may be positioned at the opening of the case 20 and coupled to the case 20 with the gasket 40 therebetween. The gasket 40 insulates the case 20 and the cap assembly 30 and seals the inside of the case 20 accommodating the electrode assembly 10 and the electrolyte.

In one or more embodiments, the cap assembly 30 may include a cap plate 31, a positive temperature coefficient element 35, a vent plate 32, an insulation member 33, a first auxiliary plate 34, and a second auxiliary plate 38.

The first auxiliary plate 34 may be electrically connected to the lead tab 37 of the electrode assembly and coupled to the lead tab 37 by welding.

The second auxiliary plate 38 may be stacked on the first auxiliary plate 34 and electrically connected to the first auxiliary plate 34 and coupled to the first auxiliary plate 34 by welding. The second auxiliary plate 38 may be positioned at the center of the electrode assembly 10 corresponding to the center pin 60 and has a penetration hole for exposing the first auxiliary plate 34.

The vent plate 32 may be positioned on the second auxiliary plate 38 with the insulation member 33 interposed therebetween. A periphery of the vent plate 32 may be inserted into the gasket 40 and coupled to the case 20.

The vent plate 32 may include a vent 32a positioned at a portion corresponding to the center pin 60. The vent 32a protrudes on the bent plate 32 toward the electrode assembly 10 and is electrically connected in contact with the first auxiliary plate 34 through the penetration hole. The vent plate 32 may have a notch 32b guiding a damage of the vent 32a around the vent 32a.

The vent 32a may be damaged under a set or predetermined pressure condition and may discharge internal gas to the outside and interrupt electrical connection with the first auxiliary plate 34. For example, in one or more embodiments, when the internal pressure of the case 20 is raised due to generation of gas, the notch 32b is damaged in advance to discharge the gas to the outside through an exhaust port 31d, thereby preventing or reducing explosion of the rechargeable battery.

Further, when an abnormal reaction is continued and the vent 32a is damaged, the electrical connection between the vent plate 32 and the first auxiliary plate 34 is cut off. Therefore, the electrical connection between the cap plate 31 and the first auxiliary plate 34 electrically connected to the vent plate 32 is cut off, so no current flow is generated any longer.

The cap plate 31 may include a center plate 31a corresponding to the center pin 60 which is the center of the electrode assembly 10, a plurality of branches 31b stretched toward the gasket 40 from the center plate 31a, and a coupling plate 31c connecting ends of the branches 31b and inserted and coupled into the gasket 40. The exhaust port 31d opened to the outside and discharging the internal gas is formed between neighboring branches 31b.

The branch 31b may be connected to the center plate 31a in a state of being bent from the coupling plate 31c, so the center of the cap plate 31 may protrude to the outside of the case 20. The cap plate 31 may be electrically connected to the first electrode current collector 11d through the vent plate 32, the second auxiliary plate 38, the first auxiliary plate 34, and the lead tab 37, and utilized as the first electrode terminal of the rechargeable battery. Therefore, when the center of the cap plate 31 is formed to protrude to the outside of the case 20, terminal connection with an external device may be facilitated.

In one or more embodiments, the positive temperature element coefficient element 35 may be formed along a second plate of the cap plate 31 and inserted and coupled into the gasket 40 in a state of being stacked between the second plate of the cap plate and the periphery of the vent plate.

The positive temperature coefficient element 35 is installed between the cap plate 31 and the vent plate 32 to control the current flow between the cap plate 31 and the vent plate 32 according to an internal temperature of the rechargeable battery.

When the internal temperature is within a set or predetermined range, the positive temperature coefficient element 35 serves as a conductor and electrically connects the cap plate 31 and the vent plate 32. However, when the internal temperature is more than the set or predetermined temperature, the positive temperature coefficient element 35 has electrical resistance which increases to infinity. Therefore, the positive temperature coefficient element 35 may interrupt a flow of charging or discharging current between the cap plate 31 and the vent plate 32.

In the cap assembly 30, while the electrode assembly 10 is inserted into the case 20, the cap assembly 30 is inserted into the gasket 40 in a form in which the vent plate 32, the positive temperature coefficient element 35, and the cap plate 31 are stacked on the periphery of the cap assembly 30, and then fitted into the opening of the case 20.

In some embodiments, the cap assembly 30 may be fixed to the opening of the case 20 through a crimping process. In these embodiments, a biding (e.g., bead or beading) unit 21 and a crimping unit 22 may be formed at a side adjacent to the opening of the case 20. The biding unit 21 may be formed through a biding (e.g., beading) process. The biding unit 21 as a structure which is dented around a diameter direction of the case 20 at an upper side of the case 20 while the case 20 accommodates the electrode assembly 10 prevents vertical movement of the electrode assembly 10.

The crimping unit 22 as a structure which protrudes relatively further than the biding unit 21 in the diameter direction is connected to the biding unit 21 and crimps an outer peripheral surface of the cap assembly 30, and a top and a bottom connected to the outer peripheral surface via the gasket 40.

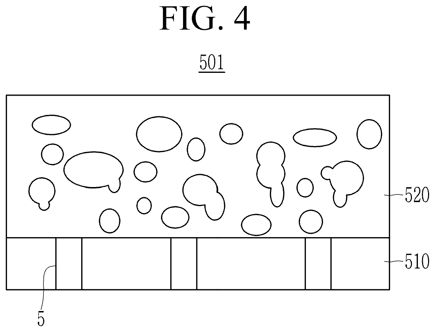

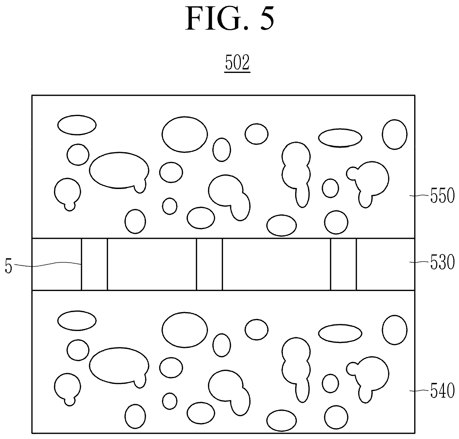

FIG. 4 and FIG. 5 are each a schematic cross-sectional view of an insulator according to one or more embodiments of the present disclosure.

The insulator according to one or more embodiments of the present disclosure illustrated in FIG. 4 is substantially the same as the insulator of FIG. 1 in most parts, so only different parts are described in more detail. The insulator of FIG. 4 may be the insulator inserted into the rechargeable battery illustrated in FIG. 1.

Referring to FIG. 4, the insulator 501 may include a first layer 510 made of an insulating material, and a second layer 520 overlapped with the first layer and formed by the foaming body.

The first layer 510 as a film made of the insulating material may have a larger strength than the second layer 520 and is attached to the second layer 520 to support the second layer 520. The first layer 510 may have a penetration hole 5 through which the electrolyte passes.

In one or more embodiments, the hole formed in the first layer 510 may be formed in a range not to lower the strength of the insulator 501 while passing the electrolyte at an appropriate or suitable speed/rate. For example, in some embodiments, the holes may be spaced apart from a center of the insulator 501 by a radius of 7 mm, and five holes having a diameter of 2 mm may be formed at a regular interval of 72°. Further, a hole for passing a tab may also be formed at the center of the insulator 501.

Further, as shown in FIG. 5, the insulator 502 according to one or more embodiments of the present disclosure may include an intermediate layer 530 formed by an insulating film, and foaming bodies 540 and 550 attached to both (e.g., two opposite) sides of the intermediate layer 530, respectively, with the intermediate layer 530 interposed therebetween.

As such, the insulator according to one or more embodiments of the present disclosure may be formed by stacking the insulating film in one or more suitable forms jointly with the foaming body. In these embodiments, the foaming body is disposed on a surface facing at least one of the cap assembly or the electrode assembly.

### Experimental Example 3 Evaluation of property of structure including insulating film

In Experimental Example 3, the property of the insulator illustrated in FIG. 4 was evaluated.

Five holes having the diameter of 2 mm for passing the electrolyte are formed in the first layer which is an insulating film. The expansion rate is an expansion rate in is a Z direction which is a thickness direction.

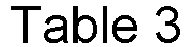

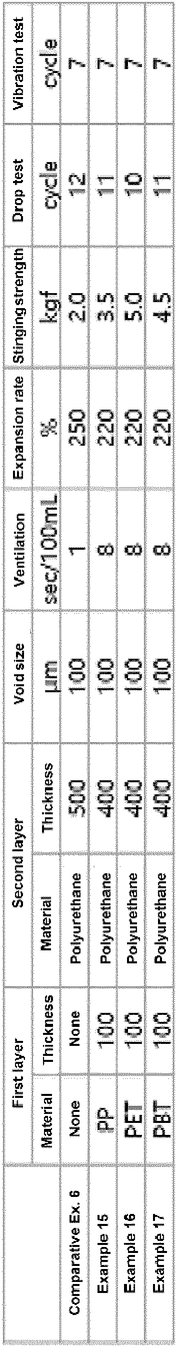

Referring to Table 3, "PP" represents polypropylene, "PET" represents polyethylene terephthalate, "PBT" represents polybutylene terephthalate. As shown in Table 3, it can be seen that in each of Examples 15 to 17 in which the first layer is formed, the stinging strength increases, and the rigidity increases as compared with Comparative Example 6 not including the first layer.

As utilized herein, "or" is not to be construed as an exclusive meaning, for example, "A or B" is construed to include A, B, A+B, and/or the like. Further, as used herein, the term "and/or" includes any and all combinations of one or more of the associated listed items. The "/" utilized herein may be interpreted as "and" or as "or" depending on the situation. Expressions such as "at least one of," "one of," and "selected from," when preceding a list of elements, modify the entire list of elements and do not modify the individual elements of the list. For example, "at least one of a, b, or c", "at least one of a, b, and/or c", "at least one selected from a, b, and c", "at least one selected from among a to c", etc. may indicate only a, only b, only c, both (e.g., simultaneously) a and b, both (e.g., simultaneously) a and c, both (e.g., simultaneously) b and c, all of a, b, and c, or variations thereof.

As utilized herein, the singular forms "a," "an," "one," and "the" are intended to include the plural forms as well, unless the context clearly indicates otherwise. Further, the use of "may" when describing embodiments of the present disclosure refers to "one or more embodiments of the present disclosure".

In the present disclosure, when holes are spherical, "diameter/size" indicates a hole diameter/size or an average hole diameter/size, and when the holes are non-spherical, the "diameter/size" indicates a major axis length or an average major axis length. The diameter/size of the holes may be measured utilizing a scanning electron microscope or the like. In some embodiments, the average diameter/size of holes may refer to as D50. D50 refers to the average diameter/size of holes whose cumulative size corresponds to 50% in the size distribution (e.g., cumulative distribution), and refers to the value of the hole size corresponding to 50% from the smallest hole when the total number of holes is 100% in the distribution curve accumulated in the order of the smallest hole size to the largest hole size.

As utilized herein, the terms "substantially," "about," or similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this present disclosure has been described in connection with what is presently considered to be practical embodiments, it is to be understood that the present disclosure is not limited to the disclosed embodiments. In contrast, it is intended to cover one or more suitable modifications and equivalent arrangements included within the scope of the appended claims and equivalents thereof.

### Reference Numerals

| | | | | | |
|---|---|---|---|---|---|
| 10: | Electrode assembly | 11: | First electrode | | |
| 12: | Separator | 13: | Second electrode | | |
| 20: | Case | 21: | Biding unit | | |
| 22: | Crimping unit | 30: | Cap assembly | | |
| 31: | Cap plate | 31a: | Center plate | | |
| 31b: | Branch | 31c: | Coupling plate | | |
| 31d: | Exhaust port | 32: | Vent plate | | |
| 32a: | Vent | 32b: | Notch | | |
| 33: | Insulation member | 34: | First auxiliary plate | | |
| 35: | Positive temperature coefficient element | | | 37: | Lead tab |
| 38: | Second auxiliary plate | 40: | Gasket | | |
| 50: | Insulator | 51: | Opening | | |
| 52: | Insulating pad | 60: | Center pin | | |

## Claims

1. A rechargeable battery comprising:
an electrode assembly (10);
a case (20) accommodating the electrode assembly (10) and an electrolyte;
a cap plate (31) coupled to the case (20) and sealing an inside of the case (20); and
an insulator (50) between the electrode assembly (10) and the cap plate (31),
wherein the insulator (50) comprises a foaming body comprising a plurality of holes.

2. The rechargeable battery as claimed in claim 1, wherein:
the foaming body is configured to expand while absorbing the electrolyte.

3. The rechargeable battery as claimed in claim 1, wherein:
an expansion rate of the foaming body after being immersed in the electrolyte and then left at 60 °C for 24 hours is 150% or more.

4. The rechargeable battery as claimed in claim 1, wherein:
the foaming body comprises a polar functional group.

5. The rechargeable battery as claimed in claim 4, wherein:
the polar functional group comprises a carbonyl group (C = O).

6. The rechargeable battery as claimed in claim 4, wherein:
the foaming body comprises at least one of polyurethane, polyester, polyamide, epoxy resin, melamine resin, acrylic ester, or polyacrylic acid.

7. The rechargeable battery as claimed in claim 1, wherein:
the insulator (50) further comprises an insulating film having a larger rigidity than that of the foaming body.

8. The rechargeable battery as claimed in claim 7, wherein:
the insulating film is attached to at least one side of the foaming body.

9. The rechargeable battery as claimed in claim 7, wherein:
the foaming body is attached to each of two opposite sides of the insulating film.

10. The rechargeable battery as claimed in claim 1, wherein:
a stinging strength of the foaming body is 1.5 kgf or more.

11. The rechargeable battery as claimed in claim 1, wherein:
a ventilation of the foaming body is configured to be 10 sec/100 mL air or less.

12. The rechargeable battery as claimed in claim 1, wherein:
a size of a hole included in the foaming body is 1 µm to 200 µm.

13. The rechargeable battery as claimed in claim 1, wherein:
the electrode assembly (10) is a winding electrode assembly.
